Europäisches Patentamt

European Patent Office

Office européen des brevets

(11) Numéro de publication : **0 294 357 B1**

# (12) FASCICULE DE BREVET EUROPEEN

(45) Date de publication du fascicule du brevet :
**14.09.94 Bulletin 94/37**

(51) Int. Cl.$^5$ : **H04N 7/133**

(21) Numéro de dépôt : **88870098.6**

(22) Date de dépôt : **27.05.88**

(54) **Procédé de codage de signaux d'image.**

(30) Priorité : **05.06.87 BE 8700623**

(43) Date de publication de la demande :
**07.12.88 Bulletin 88/49**

(45) Mention de la délivrance du brevet :
**14.09.94 Bulletin 94/37**

(84) Etats contractants désignés :
**AT CH DE ES FR GB GR IT LI LU NL SE**

(56) Documents cités :
EP-A- 0 107 203
EP-A- 0 189 703
FR-A- 2 597 282
US-A- 4 375 650
IEEE TRANSACTIONS ON COMMUNICA-
TIONS, vol. COM-33, no. 6, juin 1985, pages
551-557, IEEE, New York, US; N.B. NILL: "A
visual model weighted cosine transform for
image compression and quality assessment"

(56) Documents cités :
IEEE TRANSACTIONS ON COMMUNICA-
TIONS, vol. COM-34, no. 8, août 1986, pages
840-847, IEEE, New York, US; J.D. EGGERTON
et al.: "A visually weighted quantization
scheme for image bandwidth compression at
low data rates"
IEEE TRANSACTIONS ON COMMUNICA-
TIONS, vol. COM-30, no. 7, juillet 1982, pages
1679-1692, IEEE, New York, US; F.X.J. LUKAS
et al.: "Picture quality prediction based on a
visual model"

(73) Titulaire : **L'Etat belge, représenté par le
Secrétaire Général des Services de la
Programmation de la Politique Scientifique
8 rue de la Science
B-1040 Bruxelles (BE)**

(72) Inventeur : **Delogne, Paul
Avenue du IIIème Zouave 33
B-1342 Limelette (BE)**
Inventeur : **Vandendorpe, Luc
Rue des Volontaires de Guerre 16
B-7760 Dottignies (BE)**
Inventeur : **Macq, Benoit
Rue de la Vignette 107
B-1160 Bruxelles (BE)**

(74) Mandataire : **Vanderperre, Robert et al
Bureau Vander Haeghen S.A.
Rue Colonel Bourg 108 A
B-1040 Bruxelles (BE)**

EP 0 294 357 B1

## Description

La présente invention est relative aux procédés de codage de signaux d'image pour la transmission et la mémorisation numériques d'informations visuelles, notamment d'images fixes ou de signaux de télévision, et elle concerne plus particulièrement des perfectionnements à ces procédés en vue d'atteindre une haute efficacité de codage indépendamment des statistiques d'image et d'exploiter les propriétés de la vision humaine.

Le codage numérique d'informations visuelles demande un grand nombre de bits par image c'est-à-dire, dans le cas d'une séquence d'images, un débit binaire élevé. Ce débit peut être grandement réduit parce que, d'un point de vue statistique, il existe une forte corrélation entre les éléments d'une information visuelle. Cette corrélation, encore connue sous le nom de redondance, existe entre éléments d'une même image et entre éléments d'images successives.

On connaît plusieurs procédés de codage qui permettent de réduire le débit binaire en se basant sur la construction d'une suite d'informations décorrélées. On peut grossièrement classer ces procédés en trois catégories.

Dans les procédés prédictifs, la valeur de l'élément d'image à transmettre (élément dit courant) est prédite à partir de la valeur des éléments d'image précédemment transmis, ou plus exactement à partir d'une valeur approchée de ces éléments, ensuite l'erreur de prédiction se trouve quantifiée et un code correspondant est alors transmis. Comme la prédiction est faite à partir d'une valeur approchée des éléments précédents, et comme cette valeur approchée est elle-même construite à partir des erreurs de prédiction quantifiées, l'extrémité réceptrice est parfaitement à même de construire cette prédiction. En corrigeant celle-ci par l'erreur de prédiction qui lui est transmise, l'extrémité réceptrice est donc en mesure de calculer la valeur de l'élément d'image courant, à l'erreur de quantification près. La prédiction de l'élément d'image courant peut se baser soit sur les éléments précédents de la même ligne, soit sur les éléments précédents de la même trame, soit sur les éléments de deux ou plusieurs trames précédentes. Ce dernier cas permet d'incorporer dans les algorithmes de prédiction des techniques évoluées telles que la prédiction ou la compensation de mouvement.

Une deuxième catégorie de procédés de codage comprend les procédés à transformée. Dans ces procédés, un certain nombre d'éléments adjacents de l'image sont rassemblés en une image partielle appelée bloc. Ce bloc peut être unidimensionnel s'il est constitué d'éléments d'image pris sur une même ligne, bidimensionnel s'il est constitué d'éléments pris dans une zone rectangulaire d'une trame, ou tridimensionnel s'il est constitué d'éléments pris dans une zone rectangulaire et dans un certain nombre de trames successives. L'étape suivante consiste à appliquer aux éléments du bloc une transformation mathématique linéaire produisant des paramètres idéalement décorrélés et appelés coefficients transformés. D'un point de vue mathématique, si l'on note x la matrice constituée des éléments d'image appartenant au bloc, on construit une matrice des coefficients transformés X par une relation du type $X = Tx$ (T étant un opérateur linéaire).

Dans le cas de blocs unidimensionnels, cet opérateur est représenté par une matrice. Dans le cas de blocs bi- ou tridimensionnels, l'opérateur est en toute généralité un tenseur; en pratique cependant, on se limite à des transformations unidimensionnelles appliquées successivement selon les deux ou trois dimensions. La transformée idéale, produisant des coefficients transformés parfaitement décorrélés, est la transformée de Karhuhnen-Loève. Celle-ci est toutefois inapplicable en pratique, parce que sa mise en oeuvre suppose que les propriétés corrélatives des images soient bien déterminées et connues.

En pratique, on utilise selon les trois axes, des transformations matricielles unitaires qui offrent de bonnes propriétés de décorrélation, et notamment la transformée de Fourier discrète (DFT), la transformée de Hadamard (HT), la transformée discrète en cosinus (DCT), etc. Parmi toutes ces transformées, la DCT est l'une de celles qui possède les meilleures propriétés de décorrélation et est l'une des plus utilisées en codage d'image. Une propriété bien connue des transformations unitaires est la conservation d'énergie : la somme des variances des coefficients transformés est égale à celle des éléments d'image. Si donc on ordonne les coefficients transformés par ordre croissant, les coefficients d'ordre élevé ont des amplitudes qui sont statistiquement petites, et demandent peu de bits pour être transmis. Il existe différentes manières connues d'exploiter cette propriété, notamment le codage à seuil, le codage par zones, le codage à longueur variable, etc.

La troisième catégorie de procédés fait appel au codage hybride. Il s'agit d'une combinaison des procédés des deux premières catégories, en ce sens que l'on applique un algorithme de type prédictif aux coefficients d'une transformée.

La présente invention concerne des perfectionnements aux procédés de codage appartenant à la seconde et à la troisième catégorie. Dans la plupart des procédés antérieurs connus, les coefficients de la transformée sont quantifiés avec le même pas de quantification, indépendamment de leur ordre, ce pas pouvant être adapté, soit en fonction du contenu de la scène, soit afin de régulariser le débit binaire d'après l'état d'une mémoire tampon, soit encore afin d'attribuer à une image un nombre prédéterminé de bits. Dans ces procédés connus, la réduction du débit binaire est basée exclusivement sur la redondance intrinsèque des images, et la réduction de redondance est obtenue en prenant les coefficients transformés bloc par bloc et en leur appliquant un code réducteur de redondance déterminé en fonction des propriétés statistiques moyennes des images.

L'invention a pour objet une technique d'analyse consistant à appliquer le codage réducteur de redondance non plus aux coefficients transformés de chaque bloc pris séparément, mais à des ensembles de coefficients transformés de même ordre pris dans des groupes de blocs, ou encore à des ensembles de bits de même poids appartenant à des coefficients transformés de même ordre pris dans des groupes de blocs. Plus particulièrement, conformément à l'invention il est proposé un procédé de codage de signaux d'image pour la transmission ou la mémorisation numérique d'informations relatives à une image fixe ou mobile, dans lequel les informations relatives à l'image sont lues par blocs successifs, puis soumises à une transformation orthogonale, les coefficients de la transformée obtenue étant quantifiés, analysés selon un certain ordre et appliqués sous forme de signaux binaires à un codeur réducteur de redondance, caractérisé en ce que les signaux représentant les coefficients de la transformée sont rangés dans une mémoire organisée en plusieurs blocs et en ce que l'analyse du contenu de ladite mémoire est réalisée de manière que les signaux appliqués au codeur réducteur de redondance comprennent des ensembles de signaux de coefficients pris dans un groupe de blocs, les signaux de chaque coefficient dans chaque ensemble étant pris dans un bloc distinct appartenant audit groupe de blocs.

Cette technique d'analyse peut être appliquée à une transformation unitaire, connue en soi, ou à une transformation orthogonale correspondante. Dans ce dernier cas, l'analyse tire avantageusement parti des propriétés de la transformée perceptive du fait qu'elle correspond à une qualité progressivement croissante de l'image codée.

A cet effet, chacun des coefficients transformés de la transformée est obtenu en multipliant les coefficients transformés d'une transformation unitaire connue en soi par des facteurs de manière que la puissance de bruit de quantification pondérée par la sensibilité de l'oeil en fonction des fréquences spatiales soit minimale, cette pondération étant faite indépendamment des propriétés statistiques des images.

L'analyse par groupes de blocs des coefficients de ladite transformation orthogonale est effectuée de manière à obtenir une qualité progressivement croissante de l'image codée.

La transformation orthogonale peut être appliquée à des blocs de signaux d'image pris dans une même trame ou dans des trames différentes d'une image, et/ou être appliquée à l'erreur de prédiction déterminée de manière connue en soi dans un codeur hybride.

L'invention est exposée en détails dans ce qui suit à l'aide des dessins ci-annexés dans lesquels :
- la figure 1 montre le schéma général d'un codeur intra-trame à réduction de redondance bloc par bloc,
- la figure 2 illustre le chemin d'analyse d'un bloc d'éléments d'image en vue du codage réducteur de redondance bloc par bloc,
- la figure 3 montre le schéma d'un codeur hybride avec prédiction dans le domaine transformé et réduction de redondance bloc par bloc,
- la figure 4 montre le schéma d'un codeur hybride avec prédiction dans le domaine original et réduction de redondance par bloc,
- la figure 5 montre une modification aux schémas des figures 2, 3 et 4 selon un autre aspect de l'invention,
- la figure 6 illustre un chemin d'analyse possible du contenu de la mémoire représentée dans la figure 5.
- la figure 7 illustre une analyse au niveau des bits du contenu de la mémoire représentée dans la figure 5.

Dans ce qui suit, on se limite à décrire le traitement de la composante de luminance du signal d'image. Pour des images de couleurs, il faut considérer que les deux signaux de différence de couleur subissent un traitement analogue.

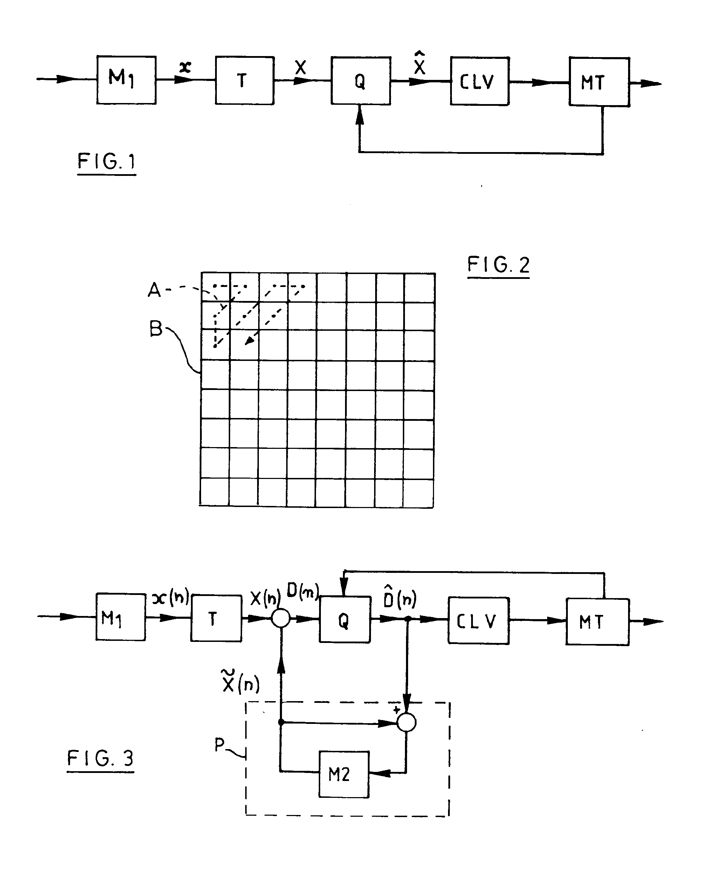

Se reportant à la figure 1, on voit représentée symboliquement l'organisation d'un codeur à transformée bidimensionnelle intra-trame, avec codage réducteur de redondance bloc par bloc. Si la transformée opère sur des blocs rectangulaires ayant une dimension de $N_1$ points dans le sens vertical et de $N_2$ points dans le sens horizontal, les éléments d'image relatifs à $N_1$ lignes successives sont d'abord accumulés dans une mémoire $M_1$. Les éléments d'image sont ensuite lus par blocs successifs. Dans la figure 1, $\underline{x}$ désigne un bloc d'éléments d'image. Le calculateur de transformation orthogonale T détermine la transformée $\hat{X}$ et les éléments de la matrice Y sont ensuite présentés à un quantificateur Q. A la sortie de celui-ci on obtient une matrice de coefficients transformés et quantifiés notée $\hat{X}$. Les coefficients transformés de la matrice $\hat{X}$ font l'objet d'un traitement réducteur de redondance qui peut être réalisé de plusieurs façons connues. Dans la version présentée dans la figure 1, les éléments de la matrice $\hat{X}$ sont traités dans un codeur à longueur variable CLV, utilisant par exemple un code Huffman. L'information binaire résultante est à débit variable en fonction du contenu local de l'image. Elle est emmagasinée dans une mémoire tampon MT. Cette information est relue à vitesse constante dans un codeur devant présenter un débit binaire de sortie constant. Il convient évidemment d'éviter que la mémoire tampon ne puisse être soit complètement vide, soit complètement pleine. A cet effet, une mesure de l'état de remplissage de la mémoire tampon MT agit en rétroaction sur le quantificateur Q afin de réduire le pas de quantification si la mémoire tampon a tendance à se vider, et de l'augmenter dans le cas contraire. Ceci est équivalent à réagir sur un coefficient multiplicatif, ou de normalisation, agissant sur les éléments de la matrice $\hat{X}$ et à utiliser un quantificateur à pas de quantification fixe.

Afin d'augmenter l'efficacité du codeur à longueur variable, les éléments de la matrice $\hat{X}$ des coefficients transformés sont souvent présentés à l'entrée du codeur CLV dans un ordre tel que celui qui est illustré à la figure 2. Le rectangle quadrillé noté B représente un bloc d'éléments d'image et à chaque case correspond un coefficient transformé de la matrice $\hat{X}$. La ligne en pointillé notée A montre le chemin d'analyse suivi : elle relie entre elles les cases analysées successivement et indique l'ordre dans lequel les coefficients de la matrice $\hat{X}$ sont présentés à l'entrée du codeur CLV. L'avantage de ce procédé d'analyse est le suivant : du fait de la redondance de l'image, les coefficients transformés ont des amplitudes qui, statistiquement, décroissent avec l'ordre du coefficient. Avec un chemin d'analyse tel que montré dans la figure 2, l'ordre des coefficients est croissant. Dès que l'on atteint les ordres élevés, il devient très probable de rencontrer des suites de coefficients de valeur nulle. De telles suites peuvent être codées de manière très efficace en leur attribuant un mot de code indiquant qu'il s'agit d'une séquence de coefficients nuls et en donnant la longueur.

Dans le schéma de la figure 1, le calculateur de transformation T, selon la technique antérieure, est organisé pour calculer une transformée unitaire (DFT, DCT, HT, etc) et les coefficients transformés sont généralement quantifiés avec le même pas de quantification, lequel peut être ajusté en fonction de l'état de remplissage de la mémoire tampon.

Selon un aspect de l'invention, le calculateur de transformation T est organisé pour calculer une transformée qui se trouve appropriée en fonction des caractéristiques de perception de l'oeil. Cette transformée, qui n'est plus unitaire comme dans la technique antérieure, sera appelée transformée perceptive. Le procédé de détermination de la transformée perceptive sera décrit en détail plus loin. Le schéma de principe du codeur peut être semblable à celui de la figure 1 mais il est clair que le code à longueur variable doit être modifié en fonction de la statistique des coefficients transformés. De plus, cette statistique peut être telle qu'il soit préférable d'utiliser des chemins d'analyse différents de celui qui est montré à la figure 2.

La transformation perceptive selon l'invention peut aussi être appliquée dans un codeur hybride intertrame avec codage prédictif. La figure 3 montre le schéma d'un codeur hybride intertrame avec prédiction dans le domaine transformé. Des suites d'éléments d'image relatifs à $N_1$ lignes successives sont accumulées dans une mémoire $M_1$ et celle-ci est lue par blocs de taille $N_1 \times N_2$. Dans la figure 2, x(n) désigne un bloc d'éléments d'image de la trame et $\underline{n}$ désigne l'ordre de la trame. Le calculateur de transformation T détermine la transformée X(n). Selon l'invention, la transformation appliquée est une transformation perceptive. A la matrice X(n) est ensuite appliqué un algorithme prédictif. A cet effet, on construit la différence D(n) entre X(n) et une prédiction $\tilde{X}$(n). Cette différence, ou erreur de prédiction, est quantifiée dans le quantificateur Q qui produit la matrice $\hat{D}$(n). Selon la technique classique des codages prédictifs, la prédiction $\tilde{X}$ (n) est formée dans un prédicteur P à partir de l'erreur de prédiction quantifiée $\hat{D}$(n). La figure 3 illustre la version la plus simple du prédicteur P la mémoire $M_2$ contient les matrices $\tilde{X}$(n-1) relatives à la trame précédente, et le prédicteur réalise l'opération $\tilde{X}$ (n) = $\tilde{X}$ (n-1) + $\tilde{D}$ (n). Le codeur à longueur variable CLV et la mémoire tampon MT opèrent comme dans le montage de la figure 1, mais ils travaillent sur l'erreur de prédiction quantifiée $\hat{D}$(n).

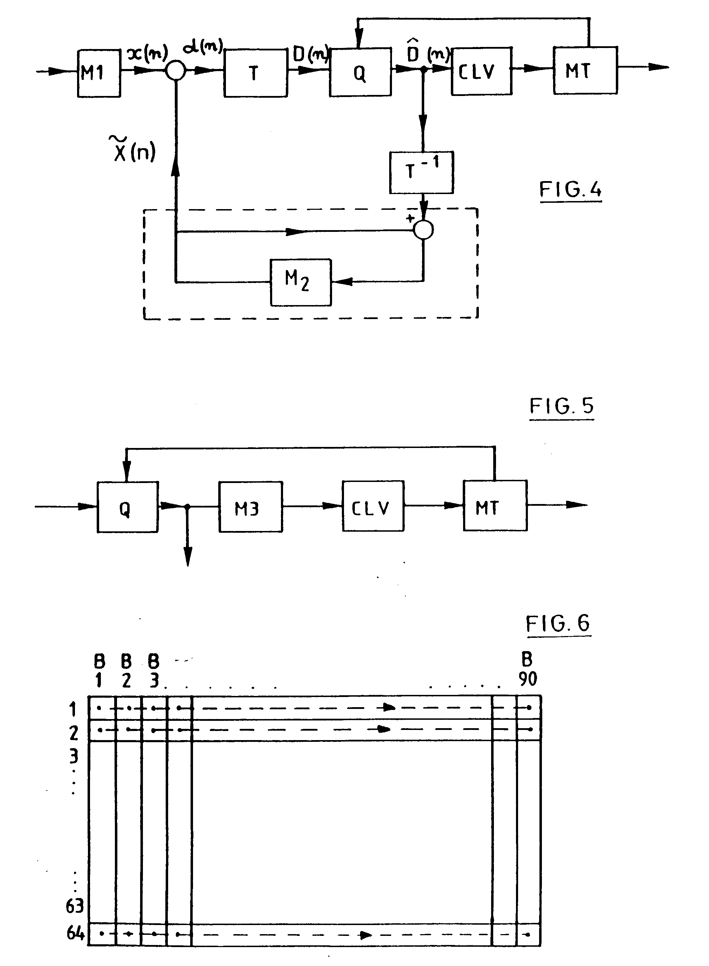

La figure 4 montre le schéma d'un codeur hybride intertrame avec prédiction dans le domaine original. Le codage prédictif est ici appliqué aux blocs d'éléments d'image $\hat{x}$(n) au lieu d'être appliqué à leur transformée comme dans le montage de la figure 3. La transformation orthogonale perceptive T est appliquée à l'erreur de prédiction d(n) qui est déterminée par différence entre les blocs d'éléments d'image x(n) et une prédiction $\hat{x}$(n) produite par le prédicteur P. Le calculateur T détermine la transformée D(n) de l'erreur de prédiction et cette transformée est quantifiée dans le quantificateur Q. La sortie quantifiée D(n) attaque d'une part un codeur à longueur variable CLV comme dans les montages précédents et d'autre part un calculateur de transformation inverse $T^{-1}$ qui attaque le prédicteur P. Il est bien connu que pour des prédicteurs P équivalents, les codeurs des figures 3 et 4 sont équivalents. L'intérêt de la prédiction dans le domaine original est toutefois que le prédicteur P peut plus aisément inclure la compensation de mouvement de trame à trame.

L'un des aspects de l'invention consiste à intégrer certaines propriétés perceptives de la vision humaine dans l'opération de quantification des coefficients de la transformée. La propriété à laquelle il est fait appel est la sensibilité de l'oeil en fonction de la fréquence spatiale. De nombreuses études (par exemple F.X.J. LUCAS and Z.L. BUDRIKIS, "Picture Quality Prediction Based on a Visual Model", IEEE trans., vol. COM-30, No 7, July 1982, pp. 1679-1692) ont montré que l'oeil humain se comporte, par rapport à la scène observée, comme un filtre dans le domaine spatial. Dans ce modèle, on considère que l'information transmise par l'oeil au cerveau est une version filtrée de la scène. Le modèle le plus simple est un filtre passe-bas, ce qui signifie que la sensibilité de l'oeil décroît lorsque la fréquence spatiale (en cycles par degré d'angle visuel) augmente. Il est vrai que, à cause du mécanisme d'adaptation de la pupille, l'oeil est aussi moins sensible aux fréquences très basses, mais ceci n'est pas pris en considération ici, parce que cela procure peu d'avantages en matière de codage.

La plupart des transformations unitaires utilisées dans les techniques de codage d'image font, dans une certaine mesure, une sorte d'analyse spectrale de l'image; il existe une certaine correspondance, au moins qualitative, entre l'ordre du coefficient et la fréquence spatiale. Les coefficients de la transformée, qui sont les éléments d'information transmis, subissent une quantification. L'image reconstruite est donc affectée d'un bruit résultant des erreurs de quantification des coefficients. Il est assez évident que l'erreur de quantification affectant un coefficient d'ordre élevé donne lieu, sur l'image reconstituée, à un bruit contenant des fréquences relativement élevées. Puisque la sensibilité de l'oeil diminue avec la fréquence, on peut coder plus grossièrement les coefficients transformés d'ordre élevé.

En fonction de cette constatation, on doit pouvoir exprimer la dégradation subjective due au codage sous la forme d'une somme des erreurs quadratiques de quantification $\varepsilon_i$ affectant les coefficients de la transformée, pondérées par des facteurs de pondération $W_i^2$ dépendant de l'ordre du coefficient. La dégradation subjective est donc donnée par une expression de la forme :

$$D = \sum_i W_i \varepsilon_i^2$$

Cette équation sera précisée ci-dessous. Il doit, par conséquent, être possible d'optimiser les erreurs de quantification acceptables en fonction de l'ordre du coefficient pour minimiser cette dégradation subjective. Cette possibilité n'a pas échappé à l'attention de certains spécialistes du codage. Toutefois, l'élément central d'une telle approche est une détermination quantitative correcte des coefficients de pondération $W_i$. Les solutions proposées pour la détermination de ces coefficients dans l'état de l'art connu ne sont pas satisfaisantes.

Nill (N.B. NILL, "A Visual Model Weighted Cosine Transform for Image Compression and Quality Assessment", IEEE Trans., vol. COM-33, No 6, June 1985, pp. 551-557) a tenté de trouver une solution pour la transformation discrète en cosinus (DCT). Le raisonnement tenu par cet auteur peut être résumé schématiquement de la manière suivante. Soit X(v) la transformée de Fourier de l'image et H(v) la transmittance du filtre visuel. Soit, par ailleurs $X_c(v)$ la transformée en cosinus de l'image. Nill cherche à trouver un filtre qui agirait dans le domaine de la transformée en cosinus et qui serait équivalent au filtre visuel, mais dans le domaine des transformée en cosinus. La transmittance $H_c(v)$ de ce filtre devrait donc satisfaire à l'équation $H_c(v)X_c(v) = H(v)X(v)$. Assez évidemment, ce problème n'a pas de solution exacte. Plus précisément, on trouve que $H_c(v)$ dépend de $X_c(v)$, c'est-à-dire du contenu de l'image. C'est un résultat assez aberrant, car il est difficile d'imaginer que les propriétés de filtrage de l'oeil soient différentes pour chaque image. De plus, le filtre trouvé a une "transmittance en cosinus" $H_c(v)$ complexe, ce qui est également aberrant car la transformation en cosinus est réelle. Afin de trouver une solution approchée à ce problème impossible, Nill introduit des approximations mathématiques qui sont difficilement justifiables, telles que remplacer un nombre complexe par son module. De plus, la quantité $X_c^2(v)$ est remplacée par la densité spectrale de puissance P(v) de l'image. Ceci est également difficile à justifier, car cette dernière est une quantité moyenne sur un grand nombre d'images. Ce raisonnement, dont plusieurs étapes trouvent difficilement une justification, conduit à trouver une fonction de pondération du bruit dans le domaine de la transformée en cosinus qui dépend donc de propriétés statistiques postulées pour les images. Ce résultat est choquant, et est le résultat d'approximations injustifiées pour trouver une solution à un problème qui, tel qu'il a été posé, n'a pas de solution.

Eggerton et Srinath (J.D. EGGERTON and M.D.SRINATH, "A Visually Weighted Quantization Scheme for Image Bandwidth Compression at Low Data Rates", IEEE Trans., vol. COM-34, No 8, August 1986, pp. 840-847) se sont également attaqués à ce problème. Utilisant une expression de la dégradation subjective de la forme précisée ci-dessus, ces auteurs cherchent à déterminer des lois de quantification des coefficients de la DCT, lois uniformes ou non, qui minimalisent la dégradation, sous la contrainte d'une entropie déterminée des coefficients transformés quantifiés. A supposer que le codeur à longueur variable ait une efficacité de codage égale à l'unité, l'entropie représente le débit binaire à la sortie du codeur à longueur variable, et elle est donc dépendante des propriétés statistiques postulées pour les images. Il s'ensuit que, tout comme dans l'approche de Nill, les coefficients de pondération $W_i$ dépendent de ces propriétés statistiques.

Bien que ceci résulte du choix délibéré de minimaliser la dégradation sous la contrainte d'une entropie fixée, un tel résultat n'est pas toujours souhaitable. Il est même tout à fait indésirable dans des applications pour lesquelles on désire garder une certaine souplesse dans le choix de la qualité d'image; c'est le cas, par exemple, lorsque l'on veut se réserver la possibilité de transmettre des images fixes avec une qualité augmentant progressivement en fonction du nombre de bits transmis. Mais même dans le cas où le débit binaire est fixé par l'application considérée, une telle propriété n'est pas souhaitable; elle s'oppose en effet à la fonction essentielle de réaction de la mémoire-tampon sur le quantificateur et aux effets bénéfiques qui en résultent, à savoir coder finement les images peu détaillées et plus grossièrement les images contenant beaucoup de détail.

En outre, on peut encore dire que le schéma de raisonnement suivi par Eggerton et Srinath afin de déterminer un filtre visuel dans le domaine des fréquences de la DCT est hautement criticable. Il conduit, en effet, à rendre le filtre différent pour chacun des blocs d'image auxquels est appliquée la DCT, selon leur position dans l'image. Les auteurs éliminent cette difficulté de manière arbitraire, en utilisant le filtre obtenu pour un bloc particulier.

Enfin, une hypothèse faite par Eggerton et Srinath à propos des propriétés statistiques des coefficients de DCT, à savoir qu'ils ont une distribution de probabilité indépendante de l'ordre du coefficient, est inacceptable. Elle est contraire à la réalité et conduit à renoncer à divers avantages du codage décorrélatif. Il s'ensuit, à tout le moins, que les valeurs numériques obtenues pour les coefficients de pondération du bruit sont inadéquates.

Des critiques similaires peuvent être formulées par rapport à l'étude de Griswold (N.C. GRISWOLD, "Perceptual Coding in the Cosine Transform Domain", Optical Engineering, vol. 19, No 3, June 1980, pp. 306-311). Ici également, des considérations difficilement justifiables conduisent à trouver des coefficients de pondération du bruit dépendant d'une hypothèse à propos de la corrélation spatiale des images, alors qu'ils ne devraient représenter que les caractéristiques perceptives de l'oeil.

On décrit à présent la réalisation de la transformée perceptive selon un aspect de l'invention. La description sera faite pour des blocs d'image rectangulaires comportant $N_1$ points dans la direction verticale et $N_2$ points dans la direction horizontale. Le cas des transformées unidimensionnelles en est un cas particulier avec $N_1 = 1$ ou avec $N_2 = 1$. La distance entre points d'image, exprimée avec une unité qui est la hauteur d'image, est notée $r_1$ dans le sens vertical et $r_2$ dans le sens horizontal. Les éléments d'image du bloc considéré sont notés $x(i_1, i_2)$, avec

$$0 \leq i_1 \leq N_1 - 1 \text{ et } 0 \leq i_2 \leq N_2 - 1.$$

Envisageons d'abord une transformation unitaire, et soient $X(n_1, n_2)$ les coefficients transformés, avec

$$0 \leq n_1 \leq N_1 - 1 \text{ et } 0 \leq n_2 \leq N_2 - 1.$$

La transformation inverse peut s'écrire sous la forme

$$x(i_1, i_2) = \sum_{n_1=0}^{N_1-1} \sum_{n_2=0}^{N_2-1} X(n_1, n_2) \, h_{n_1 n_2}(i_1, i_2) \qquad (2)$$

Cette équation montre que l'on reconstitue le bloc d'image par une sommation de $N_1 N_2$ images partielles décrites par $h_{n_1, n_2}(i_1, i_2)$, pondérées par les coefficients transformés respectifs $X(n_1, n_2)$. Ces images partielles, caractéristiques de la transformation unitaire considérée, sont les fonctions de base de celle-ci. Dans les schémas de codeur tels que ceux des figures 1, 3 et 4, l'image reconstituée est affectée par l'erreur de quantification faite soit sur les coefficients transformés eux-mêmes (cas de la figure 1), soit sur leurs erreurs de prédiction (cas des figures 3 et 4). Le bruit de quantification affectant le bloc d'image est donné par

$$\varepsilon_x(i_1, i_2) = \sum_{n_1=0}^{N_1-1} \sum_{n_2=0}^{N_2-1} \varepsilon_X(n_1, n_2) \, h_{n_1 n_2}(i_1, i_2) \qquad (3)$$

où $\varepsilon_X(n_1, n_2)$ est l'erreur de quantification relative au coefficient d'ordre $(n_1, n_2)$. Le bruit de quantification consiste donc en une somme des fonctions de base, pondérées par les erreurs de quantification.

Il est intéressant de constater que la plupart des transformées unitaires utilisées en codage d'image (DFT, DCT, HT, etc), outre qu'elles produisent des coefficients transformés bien décorrélés, font également une sorte d'analyse spectrale. Les coefficients transformés d'ordre $(n_1,n_2)$ croissant et les fonctions de base correspondante, représentent en effet le contenu de l'image aux fréquences spatiales élevées. On sait par ailleurs que la sensibilité de l'oeil décroît avec la fréquence spatiale. L'effet d'une erreur de quantification affectant un coefficient d'ordre élevé produit un bruit de quantification concentré aux fréquences spatiales élevées, et qui est peu visible. On peut donc tirer parti des propriétés perceptives de l'oeil en tolérant une plus grande erreur de quantification sur les coefficients d'ordre élevé que sur les coefficients d'ordre faible. Cette constatation est à la base de l'invention.

Il est vrai que l'on trouve dans la littérature l'une ou l'autre proposition de coder de manière différente les coefficients d'une transformée unitaire en fonction de leur ordre, mais il ne s'agit guère que de cas spécifiques. Ainsi il a été proposé d'utiliser des lois de quantification non-linéaires et différentes pour les coefficients d'une transformée de Hadamard d'ordre 2 x 2. Selon l'invention, cependant, une fonction représentative des propriétés perceptives de la vision est intégrée de manière systématique au procédé de codage pour le biais d'une transformation modifiée perceptive. A cet effet, il est proposé ci-après une formulation mathématique pour la perception du bruit de quantification. La démonstration des relations qui vont être exposées est malaisé et sortirait du cadre habituel de la description d'une invention. Si l'on note :

1) v et u les fréquences spatiales verticale et horizontale, respectivement, exprimées en cycle par hauteur d'image (c/H),

2) $H_{n_1,n_2}(f_1,f_2)$ la transformation de Fourier discrète bidimensionnelle de la fonction de base $h_{n_1,n_2}(i_1,i_2)$

3) $\sigma^2_{\varepsilon X,n_1,n_2}$ la variance de l'erreur de quantification affectant le coefficient transformé $X_{n_1,n_2}$,

on peut montrer que le bruit de quantification affectant l'image analogique reconstituée possède une densité spectrale de puissance donnée par

$$\gamma_N(v,u) = \frac{r_1 r_2}{N_1 N_2} \sum_{N_1=0}^{N_1-1} \sum_{n_2=0}^{N_2-1} \sigma^2_{\varepsilon X,n_1 n_2} \left| H_{n_1 n_2}(vr_1,ur_2) \right|^2 \quad (4)$$

La puissance de bruit pourrait être calculée en intégrant cette fonction sur le domaine $(\pm v_M, \pm u_M)$ des fréquences spatiales. Toutefois, une puissance de bruit ainsi calculée ne tient pas compte de la visibilité du bruit en fonction de la fréquence. L'effet subjectif du bruit est mieux représenté en pondérant d'abord la densité spectrale de bruit par une fonction $W(v,u)$ représentant la sensibilité de l'oeil en fonction des fréquences spatiales. La dégradation subjective est alors donnée par la puissance de bruit pondéré

$$P_{N,p} = \int_{-v_M}^{v_M} \int_{-u_M}^{u_M} \gamma_N(v,u)\ W(v,u)\ dv\ du \quad (5)$$

La combinaison des deux équations précédentes conduit à exprimer la puissance de bruit pondéré sous la forme

$$P_{N,p} = \sum_{n_1=0}^{N_1-1} \sum_{n_2=0}^{N_2-1} W_{n_1 n_2}\ \sigma^2_{\varepsilon X,n_1 n_2} \quad (6)$$

où les coefficients $W_{n_1,n_2}$, appelés coefficients de pondération du bruit, sont donnés par

$$W_{n_1 n_2} = \frac{r_1 r_2}{N_1 N_2} \int_{-v_M}^{v_M} \int_{-u_M}^{u_M} |H_{n_1 n_2}(vr_1, ur_2)|^2 W(v,u) \, dv \, du \quad (7)$$

On peut montrer que, pour un débit binaire fixé à la sortie du quantificateur, la puissance de bruit pondéré est minimale lorsque tous les termes du second membre de l'équation (6) sont égaux. Cela signifie qu'il convient d'utiliser des pas de quantification différents pour les coefficients transformés, en fonction de l'ordre de ceux-ci. Plus précisément, les pas de quantification des coefficients de la transformée unitaire doivent suivre la loi

$$\Delta X_{n_1 n_2} = k/\sqrt{W_{n_1 n_2}} \quad (8)$$

où k est une constante. L'utilisation de pas de quantification différents selon l'ordre du coefficient est cependant peu pratique. Ceci est particulièrement vrai lorsque ce pas doit être adapté en fonction d'une variable telle que le degré de remplissage d'une mémoire tampon. La transformation perceptive résout ce problème. Elle consiste en une modification de la transformée unitaire considérée, par une mise à échelle adéquate des coefficients de celle-ci; plus précisément, les coefficients transformés $Y_{n_1 n_2}$ de la transformée perceptive sont reliés à ceux de la transformée unitaire par la relation

$$Y_{n_1 n_2} = X_{n_1 n_2} \sqrt{W_{n_1 n_2}} \quad (9)$$

Il est clair que l'on peut associer une transformation perceptive à toute transformation unitaire. On peut ainsi parler, dans le cadre de l'invention. de DFT perceptive, de DCT perceptive, de HT perceptive, etc.

Bien entendu, comme il résulte des équations (7) à (9), les transformées ne peuvent être définies de manière rigoureuse que si l'on connaît la fonction W(v,u) donnant la sensibilité de l'oeil en fonction des fréquences spatiales. Cette fonction n'est pas définie de manière unique dans la littérature. On propose ci-dessous une manière préférée de la définir. On ne sortirait pas du cadre de l'invention en proposant une autre fonction, voire en proposant une autre valeur des coefficients de pondération $W_{n_1 n_2}$ servant à la mise à échelle, voire encore en remplaçant la multiplication dans l'équation (9) par une division par des facteurs qui seraient les inverses des $\sqrt{W_{n_1 n_2}}$, et que l'on pourrait appeler seuils de visibilité des coefficients transformés.

La manière préférée de définir la fonction W(u,v) se fonde sur la notion de rapport signal à bruit pondéré couramment utilisée dans le domaine de la télévision, et notamment sur les courbes de pondération du bruit définies par le CCIR (Comité Consultatif International pour les Radiocommunications). Cette préférence se justifie par le fait que les courbes de pondération du bruit adoptées par le CCIR résultent de nombreux essais et sont communément admises.

La notion de rapport signal à bruit pondéré s'applique pour des bruits additifs à un signal video analogique. Une tension de bruit n(t) additive à un signal video donne lieu sur l'écran, en fonction des caractéristiques du système de balayage utilisé en télévision, à un bruit N(x,y), où x et y sont des coordonnées de position. Il est ainsi possible de convertir la densité spectrale $\gamma_n(f_v)$ du bruit n(t) en fonction de la fréquence video $f_v$ en une densité spectrale $\gamma_N(v,u)$ du bruit N(x,y) en fonction des fréquences spatiales. Les caractéristiques des bruits video additifs auxquels s'appliquent les recommandations du CCIR sont telles qu'elles correspondent à des densités spectrales $\gamma_N(v,u)$ indépendantes de v (c'est-à-dire à des bruits non corrélés de ligne à ligne), mais qui peuvent être des fonctions quelconques de u. Dans la version préférée, on impose que la fonction W(v,u) donne lieu à la même puissance de bruit pondéré que pour la pondération du bruit admise par le CCIR en fonction de la fréquence video. Il suffit alors d'imposer une condition supplémentaire pour que la fonction W(u,v) soit uniquement définie. La condition choisie est celle d'isotropie de l'oeil en fonction des deux fréquences spatiales, c'est-à-dire que la courbe de pondération est fonction de $\sqrt{u^2 + v^2}$. Cette hypothèse n'est qu'une approximation du comportement réel de l'oeil et d'autres conditions pourraient être retenues. Une approximation moins bonne de l'oeil mais conduisant à une réalisation plus simple est d'admettre une fonction séparable : $W(u,v) = W_1(u)W_2(v)$.

Encore faut-il tenir compte de ce que, au cours de l'évolution historique, le CCIR a défini différentes courbes de pondération du bruit. La courbe admise actuellement, dite du réseau de pondération unique, ne convient pas parce qu'elle a été définie pour des signaux composites NTSC, PAL ou SECAM et tient compte de ce que les signaux de chrominance sont transposés dans le haut de la bande de base. Le codage numérique des images s'appliquant aux composantes séparées de luminance et de différence de couleur, il est préférable de se référer aux anciennes courbes définies pour ces composantes, et par exemple à la recommandation 461 (Genève 1974).

La fonction de pondération admise en fonction de la fréquence video est la même pour la luminance et pour les signaux de différence de couleur, et correspond à un filtre passe-bas du premier ordre ayant une fréquence de coupure de 0.482 MHz, la pondération étant limitée à 5 MHz pour la luminance et à 1.67 MHz pour les signaux de différence de couleur. Pour le format d'échantillonnage défini par l'Avis 601 du CCIR et partant d'une transformée DCT travaillant sur des blocs 8x8 on obtient les coefficients donnés par les tables 1 et 2.

```
9.9319 3.4115 1.5038 0.7310 0.4263 0.2387 0.0688 0.0043
5.5120 2.4201 1.2289 0.6425 0.3848 0.2049 0.0500 0.0027
3.1932 1.7296 1.0018 0.5667 0.3500 0.1872 0.0444 0.0023
1.7998 1.1693 0.7694 0.4753 0.3055 0.1575 0.0338 0.0018
1.0958 0.7981 0.5791 0.3868 0.2565 0.1217 0.0213 0.0012
0.7450 0.5812 0.4429 0.3115 0.2067 0.0852 0.0116 0.0009
0.5793 0.4794 0.3783 0.2624 0.1538 0.0486 0.0049 0.0007
0.4897 0.4215 0.3580 0.2549 0.1103 0.0195 0.0022 0.0004
```

Table 1. Coefficients de pondération $W_{n_1 n_2}$ pour la luminance.

```
13.1953 7.3034 4.1971 2.1025 0.6184 0.0607 0.0155 0.0024
 6.7635 4.3520 2.8420 1.3675 0.3066 0.0265 0.0099 0.0012
 3.6300 2.6165 1.7565 0.7232 0.1192 0.0126 0.0048 0.0007
 1.5775 1.0626 0.6191 0.1866 0.0223 0.0041 0.0011 0.0002
 0.3741 0.1772 0.0812 0.0180 0.0024 0.0005 0.0001 0.0000
 0.0347 0.0175 0.0116 0.0048 0.0007 0.0001 0.0000 0.0000
 0.0118 0.0075 0.0039 0.0011 0.0002 0.0000 0.0000 0.0000
 0.0016 0.0009 0.0006 0.0003 0.0000 0.0000 0.0000 0.0000
```

Table 2. Coefficients de pondération $W_{n_1 n_2}$ pour les différences de couleur.

Il est clair que, selon les principes énoncés plus haut, on obtiendra des valeurs différentes des coefficients de pondération, soit pour une autre transformée unitaire, soit pour un autre choix de la fonction de pondération, soit encore pour un autre format d'échantillonnage.

En ce qui concerne la réalisation proprement dite, le calcul de la transformée perceptive est généralement préférable à l'application aux coefficients de la transformée unitaire, de pas de quantification dépendant de l'ordre des coefficients. L'utilisation d'un même pas de quantification pour tous les coefficients rend en effet plus aisée l'adaptation de ce pas en fonction d'une quantité telle que l'état de remplissage d'une mémoire tampon. Le calcul de la transformée perceptive peut encore être fait de deux manières. On peut recourir à des multiplieurs matriciels. On peut aussi calculer d'abord la transformée unitaire correspondante, et ensuite multiplier les coefficients transformés par $\sqrt{W_{n_1 n_2}}$. Cette deuxième manière de procéder, dans laquelle on utiliserait un algorithme de calcul rapide pour la transformée unitaire, réduit le nombre de multiplications à effectuer.

On peut noter, à l'observation des Tables 1 et 2, que les coefficients de pondération $W_{n_1 n_2}$ sont faibles pour des ordres élevés. Par conséquent, les coefficients transformés d'ordre élevé sont notablement plus petits pour la transformée perceptive que pour la transformée unitaire correspondante, ceci pour une même puissance de bruit de quantification pondéré. C'est pour cette raison que l'on obtient une plus grande réduction du débit binaire. En particulier, dans un codage à réduction de redondance bloc par bloc, avec un chemin d'analyse tel que montré à la figure 2, il est plus probable de rencontrer de longues séquences de coefficients nuls, ce qui contribue beaucoup à la réduction du débit binaire, particulièrement dans les codeurs hybrides.

On décrira maintenant l'autre aspect de l'invention, consistant en une analyse d'ensembles de coefficients de même ordre, pris dans un groupe de blocs, et visant à augmenter l'efficacité du code réducteur de redondance et à le rendre indépendant des statistiques des images. Bien qu'on en tire le maximum d'avantages lorsqu'on l'utilise avec une transformation perceptive, cet aspect de l'invention peut également s'appliquer à une transformation unitaire connue en soi.

Dans un mode de réalisation exemplaire, on suppose que la taille des blocs est de 8 x 8 et que le format d'échantillonnage est celui de l'Avis 601 du CCIR, pour lequel on a 720 échantillons de luminance dans la partie active d'une ligne de l'image. Un ensemble de huit lignes de l'image donne alors lieu à 90 blocs. Le traitement réducteur de redondance peut être appliqué à de tels groupes de blocs, plutôt qu'à chaque bloc pris séparément. Dans ce but, les schémas de codeurs montrés dans les figures 1, 3 et 4 sont modifiés comme indiqué dans la figure 5. Les soixante-quatre coefficients transformés et quantifiés de chacun des 90 blocs sont rangés dans une mémoire $M_3$ avant d'être appliqués au codeur à longueur variable CLV. La mémoire $M_3$ est organisée en 64 lignes et 90 colonnes comme illustré schématiquement à la figure 6. Dans chaque colonne sont rangés, par ordre croissant, les signaux binaires représentant les coefficients transformés et quantifiés d'un bloc. Le contenu de la mémoire $M_3$ peut être analysé ligne par ligne comme l'indiquent symboliquement les pointillés dans la figure 6. Il est évident que l'analyse porte alors sur de longues suites de coefficients obéissant à la même loi statistique, certes dépendante de l'ordre du coefficient. Cette stabilité statistique permet l'utilisation de codes plus efficaces que lors du codage d'une suite de coefficients obéissant à des lois différentes, comme c'est le cas lorsqu'on analyse la suite des coefficients d'un bloc selon un schéma tel que celui de la figure 2. En particulier, on tire avantage de ce que l'on rencontre de très longues séquences de coefficients nuls lorsqu'on analyse des coefficients d'ordre élevé.

Dans le processus d'analyse coefficient par coefficient comme mentionné ci-dessus, la rencontre d'un coefficient non nul, bien que très petit, rompt les séquences de zéros. Une amélioration peut être obtenue en analysant le contenu de la mémoire $M_3$ bit par bit. Suivant cette technique, les bits de poids le plus élevé (MSB) des coefficients sont lus ligne par ligne, puis les bits de poids immédiatement inférieur (2MSB), et ainsi de suite. Ce processus d'analyse offre l'avantage qu'un coefficient non nul, quoique très petit, ne rompt pas les séquences de zéros avant que ne soient atteints les bits de poids faible.

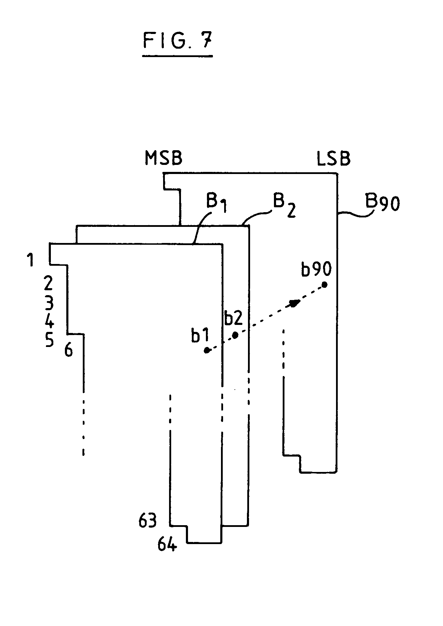

On ne tire cependant pleinement avantage de l'analyse du contenu de la mémoire $M_3$ bit par bit que lorsqu'on utilise des codes universels. La mémoire M3 précitée dans laquelle sont emmagasinés les coefficients transformés $X_{n1n2}$ avant d'être envoyés au codeur CLV (figure 5) est organisée en plusieurs plans tels que B1, B2 ... B90 comme présenté à la figure 7 et dans chaque plan sont rangés les signaux représentant les coefficients transformés correspondant à un bloc. Dans chaque plan, le numéro de ligne correspond à l'ordre du coefficient transformé (variant de 1 à 64 pour des blocs de taille 8x8), tandis que le numéro de colonne croît en fonction du poids des bits par ordre décroissant depuis le bit de plus fort poids (MSB) jusqu'au bit de plus faible poids (LSB). La forme des plans représentée dans la figure 7 correspond à une numérotation des coefficients transformés selon un ordre tel que celui qui est illustré dans la figure 2. Certains bits de plus fort poids de coefficients d'ordre élevé sont systématiquement nuls du fait que les coefficients de pondération décroissent avec la fréquence spatiale. Ces bits de plus fort poids (MSB) qui sont systématiquement nuls n'ont pas été représentés dans la figure 7.

Conformément à l'invention, le contenu de la mémoire M3 est lu de manière que les signaux appliqués au codeur réducteur de redondance CLV comprennent des ensembles de bits appartenant à des coefficients transformés de même ordre pris dans un groupe de blocs, les bits de chaque coefficient dans un même ensemble étant pris dans un bloc distinct appartenant audit groupe de blocs. Dans le cas exemplaire d'un groupe de 90 blocs, correspondant à huit lignes d'image dans le format conforme à l'Avis 601 du CCIR, chaque mot binaire appliqué au codeur réducteur de redondance se compose ainsi de bits d'un poids déterminé d'un coefficient d'ordre déterminé tels que les bits notés b1, b2, ... b90 dans la figure 7. Dans un tel mot, composé d'après la technique d'analyse selon l'invention, on peut considérer que ces bits sont indépendants entre eux et que les probabilités $p_0$ et $p_1 = 1 - p_0$ que ces bits prennent les valeurs 0 ou 1 sont constantes à l'intérieur du mot, quoique dépendantes des numéros de colonne et de ligne.

Les codes universels, dont le principe est connu en soi (par exemple Lynch, Davisson, Schalkwijk, Tanaka et Leon-Garcia, et d'autres), sont des codes réducteurs de redondance s'appliquant à de longs mots de N chiffres binaires indépendants entre eux, et ayant des probabilités $p_0$ et $p_1$ indépendantes de la position du chiffre. Ils sont dits universels parce que l'efficacité de codage est très élevée dans une très large gamme de la probabilité $p_1$, par exemple entre 0,001 et 0,999. Le caractère universel de ces codes entraîne que le même code peut être utilisé pour tous les mots binaires dans une technique d'analyse telle qu'illustrée dans la figure 7. L'intérêt principal des codes universels, par opposition à des codes tels que ceux de Huffmann, est que, dans le cadre considéré ici, ils assurent une grande efficacité indépendemment des propriétés statistiques des images.

Cette propriété explique pourquoi, dans le cadre de l'invention, on a tenu à définir les coefficients de pondération du bruit $W_{n1n2}$ indépendemment de toute statistique d'image. Les codes universels sont, en effet, efficaces quelle que soit cette statistique.

Bien que le principe des codes universels soit connu en soi, ces codes peuvent encore être raffinés afin d'augmenter leur efficacité et leur utilité dans un cas d'application déterminé. On a supposé ci-dessus qu'un mot binaire de longueur N déterminée était présenté à l'entrée du codeur CLV qui le transforme par le codeur en un mot de longueur variable selon le nombre de chiffres 1 contenus dans le mot d'entrée. Une autre version de codes universels transforme des mots d'entrée de longueur N variable en des mots de sortie de longueur fixe; cette forme de code universel est plus appropriée à des réseaux fonctionnant selon un mode de transmission par paquets.

La combinaison adéquate du processus d'analyse bit par bit et de la transformation perceptive, selon l'invention, présente encore d'autres avantages. On suppose que l'écriture binaire des coefficients transformés dans la mémoire $M_3$ est faite dans un code tel qu'à des poids de bit décroissants corresponde une quantification de plus en plus fine.

La définition de la transformation perceptive est telle que, dans ces conditions, les colonnes de la figure 7 correspondent à des qualités d'image croissantes lorsqu'on lit le tableau de gauche à droite. Plus précisément, l'arrêt de l'analyse à une colonne donnée correspond à un rapport signal à bruit pondéré déterminé. En pratique cependant, du fait que les coefficients d'ordre élevé sont statistiquement petits, l'analyse colonne par colonne donne lieu également à une restitution progressive des détails, ce qui est similaire à une augmentation de la définition de l'image. Enfin, dans les codeurs mixtes intra-trame et hybride, les codes universels conviennent pour coder des groupes de blocs comprenant à la fois des blocs intra-trame et des blocs d'erreurs de prédiction.

Ces propriétés de progressivité de la qualité d'image sont très intéressantes dans diverses applications. Pour un circuit de transmission de télévision à débit binaire fixe, la régulation du débit par réaction de la mémoire tampon MT sur le quantificateur revient à décider de la colonne à laquelle le codeur à longueur variable arrête le processus d'analyse de la mémoire $M_3$, et l'efficacité du codage est assurée de manière automatique, sans qu'il soit nécessaire d'utiliser des codes de Huffmann adaptés à chaque finesse de quantification. Dans un réseau à transmission par paquets, une telle régulation n'existe généralement pas et la colonne à laquelle on arrête le processus d'analyse résulte d'un choix fait a priori et qui détermine la qualité de l'image; on dispose ainsi d'un moyen simple de modifier celle-ci. Par ailleurs, pour des images fixes, en faisant une telle analyse pour toute l'image plutôt que sur un nombre limité de blocs, on transmet celle-ci progressivement; une telle progressivité est considérée comme une qualité importante pour les systèmes de transmission ou d'archivage d'images fixes.

Le procédé de codage selon l'invention peut être appliqué dans une vaste gamme d'applications. Il convient également pour la télévision classique et pour la télévision à haute définition, ainsi que pour la vidéoconférence et la visio-téléphonie. Il a été montré qu'il s'applique aussi bien au traitement intra-trame qu'au traitement hybride inter-trame. Il est également adéquat pour la transmission et l'archivage d'images fixes. Les paramètres du procédé doivent, bien entendu, être adaptés à chaque type d'application. Il convient en particulier d'adapter les coefficients de pondération au format d'analyse et d'échantillonnage de l'image, et éventuellement en fonction de la distance de l'observateur à l'écran. On ne sortirait pas du cadre de l'invention en approchant les facteurs multiplicatifs $\sqrt{W_{n_1n_2}}$ permettant de transformer les coefficients de la transformation unitaire en ceux de la transformation perceptive par puissances de deux; cette approximation permet de remplacer les multiplications par des décalages de chiffres binaires, voire encore de ne pas effectuer ces décalages, mais d'analyser les bits des coefficients de la transformation unitaire dans un ordre correspondant, dans les faits, à l'utilisation de la transformation perceptive.

**EP 0 294 357 B1**

**Revendications**

1. Procédé de codage de signaux d'image pour la transmission ou la mémorisation numérique d'informations relatives à une image fixe ou mobile, dans lequel les informations relatives à l'image sont lues par blocs successifs, puis soumises à une transformation orthogonale, les coefficients de la transformée obtenue étant quantifiés, analysés selon un certain ordre et appliqués sous forme de signaux binaires à un codeur réducteur de redondance, caractérisé en ce que les signaux représentant les coefficients de la transformée (T) sont rangés dans une mémoire (M3) organisée en plusieurs blocs (B1, B2 ... B90) et en ce que l'analyse du contenu de ladite mémoire (M3) est réalisée de manière que les signaux appliqués au codeur réducteur de redondance (CLV) comprennent des ensembles de signaux de coefficients pris dans un groupe de blocs, les signaux de chaque coefficient dans chaque ensemble étant pris dans un bloc distinct appartenant audit groupe de blocs.

2. Procédé selon la revendication 1, caractérisé en ce que la transformation orthogonale (T), dite perceptive, est telle que chacun des coefficients transformés ($Y_{n1n2}$) de la transformée est obtenu en multipliant les coefficients transformés ($X_{n1n2}$) d'une transformation unitaire connue en soi par des facteurs ($\sqrt{W_{n1n2}}$) de manière que la puissance de bruit de quantification pondérée par la sensibilité de l'oeil en fonction des fréquences spatiales soit minimale, cette pondération étant faite indépendemment des propriétés statistiques des images.

3. Procédé de codage selon les revendications 1 et 2, caractérisé en ce que ladite analyse par groupes de blocs des coefficients de ladite transformation perceptive est effectuée de manière à obtenir une qualité progressivement croissante de l'image codée.

4. Procédé de codage selon l'une des revendications 1, 2 ou 3, caractérisé en ce que ladite transformation orthogonale est appliquée à des blocs d'éléments d'image pris dans la même trame ou dans des trames différentes.

5. Procédé de codage selon l'une des revendications 1, 2 ou 3, caractérisé en ce que ladite transformation orthogonale et ladite analyse sont appliquées à l'erreur de prédiction déterminée de manière connue en soi dans un codeur hybride.

6. Procédé de codage selon l'une des revendications précédentes, caractérisé en ce que ladite analyse est appliquée à des groupes de blocs comprenant à la fois des blocs d'éléments d'image et des blocs d'erreur de prédiction.

7. Procédé de codage selon l'une des revendications précédentes, caractérisé en ce que ladite analyse présente au codeur réducteur de redondance des ensembles de bits, chaque bit dans un ensemble appartenant à un coefficient pris dans un bloc distinct d'un groupe de blocs.

8. Procédé selon l'une des revendications 2 à 7, caractérisé en ce que la transformée perceptive est calculée à l'aide d'un multiplieur matriciel.

9. Procédé selon l'une quelconque des revendications 1 à 8, dans lequel les coefficients de pondération du bruit $W_{n1n2}$ servent à définir une puissance de bruit de quantification pondérée donnée par la formule

$$P_{N,p} = \sum_{n_1=0}^{N_1-1} \sum_{n_2=0}^{N_2-1} W_{n1n2} \; \sigma^2_{\varepsilon x, n1n2}$$

où $\sigma^2_{\varepsilon x, n1n2}$ est la variance de l'erreur de quantification affectant le coefficient transformé $X_{n1n2}$ de la transformation unitaire, caractérisé en ce que les coefficients de pondération sont liés à une fonction $W(u,v)$, exprimant la sensibilité de l'oeil en fonction des fréquences spatiales u et v en cycles par hauteur d'image, par la relation

EP 0 294 357 B1

$$W_{n1n2} = \frac{r_1 r_2}{N_1 N_2} \int_{-v_M}^{v_M} \int_{-u_M}^{u_M} |H_{n1n2}(vr_1, ur_2)|^2 W(u,v)\, du\; dv$$

où $r_1$ et $r_2$ sont les dimensions géométriques d'un bloc et $H_{n1n2}$ est la transformée de Fourier discrète de la fonction de base d'ordre ($n_1 n_2$) de la transformation unitaire.

**Patentansprüche**

1. Verfahren zum Kodieren von Bildsignalen zur numerischen Übertragung oder Speicherung von Informationen, die ein feststehendes oder bewegbares Bild betreffen, bei dem die das Bild betreffenden Informationen in aufeinanderfolgenden Blöcken gelesen und anschließend einer orthogonalen Transformation unterzogen werden, wobei die Koeffizienten der erhaltenen Transformation quantifiziert, gemäß einer bestimmten Ordnung analysiert und als Binärsignale einem Redundanzreduzierkodierer zugeführt werden, dadurch gekennzeichnet, daß die die Koeffizienten der Transformation (T) darstellenden Signale in einen in mehrere Blöcke (B1, B2 ... B90) unterteilten Speicher (M3) gespeichert werden, und daß die Analyse des Inhalts des Speichers (M3) derart erfolgt, daß die dem Redundanzreduzierkodierer (CLV) zugeführten Signale aus einer Gruppe von Blöcken entnommene Koeffizientsignalgruppen aufweisen, wobei die Signale jedes Koeffizienten in jeder Gruppe aus einem anderen zu der Gruppe der Blöcke gehörenden Block entnommen werden.

2. Verfahren nach Anspruch 1, dadurch gekennzeichnet, daß die als perzeptiv bezeichnete orthogonale Transformation (T) derart erfolgt, daß jeder der Transformationskoeffizienten ($Y_{n1n2}$) der Transformation erhalten wird, indem die Transformationskoeffizienten ($X_{n1n2}$) einer an sich bekannten Einheitstransformation mit Faktoren ($\sqrt{W_{n1n2}}$) derart multipliziert werden, daß die nach der Empfindlichkeit des Auges in Abhängigkeit von den Raumfrequenzen gewichtete Rauschleistung der Quantifizierung minimal ist, wobei diese Gewichtung unabhängig von den statistischen Eigenschaften der Bilder erfolgt.

3. Kodierverfahren nach Anspruch 1 und 2, dadurch gekennzeichnet, daß die Analyse nach Gruppen von Blöcken der Koeffizienten der perzeptiven Transformation derart durchgeführt wird, daß eine zunehmend steigende Qualität des kodierten Bildes erhalten wird.

4. Kodierverfahren nach einem der Ansprüche 1, 2 oder 3, dadurch gekennzeichnet, daß die orthogonale Transformation auf Blöcke von Bildelementen angewendet wird, die aus demselben oder aus verschiedenen Rahmen entnommen wurden.

5. Kodierverfahren nach einem der Ansprüche 1, 2 oder 3, dadurch gekennzeichnet, daß die orthogonale Transformation und die Analyse auf den Vorhersagefehler angewendet werden, der in an sich bekannter Weise in einem Hybrid-Kodierer bestimmt wird.

6. Kodierverfahren nach einem der vorhergehenden Ansprüche, dadurch gekennzeichnet, daß die Analyse auf Gruppen von Blöcken angewendet wird, die gleichzeitig Bildelementblöcke und Vorhersagefehlerblöcke aufweisen.

7. Kodierverfahren nach einem der vorhergehenden Ansprüche, dadurch gekennzeichnet, daß durch die Analyse dem Redundanzreduzierkodierer Bitgruppen zugeführt werden, wobei jedes Bit in einer Gruppe zu einem Koeffizienten gehört, der aus einem anderen Block der Gruppe von Blöcken entnommen wurde.

8. Verfahren nach einem der Ansprüche 2 bis 7, dadurch gekennzeichnet, daß die perzeptive Transformation mittels eines Matrix-Multiplikatorwerks berechnet wird.

9. Verfahren nach einem der Ansprüche 1 bis 8, bei dem die Rauschgewichtungskoeffizienten $W_{n1n2}$ zum Definieren einer gewichteten Quantifizierungsrauschleistung dienen, die durch die Formel

13

$$P_{N,p} = \sum_{n_1=0}^{N_1-1} \sum_{n_2=0}^{N_2-1} W_{n1n2} \sigma^2_{\varepsilon x, n1n2}$$

ausgedrückt werden, wobei $\sigma^2_{\varepsilon x, n1n2}$ die Abweichung des den Transformationskoeffizienten $X_{n1n2}$ der Einheitstransformation beeinflussenden Quantifizierungsfehlers bezeichnet, dadurch gekennzeichnet, daß die Gewichtungskoeffizienten mit einer Funktion W(u,v) verbunden werden, die die Empfindlichkeit des Auges in Abhängigkeit von den Raumfrequenzen u und v in Zyklen pro Bildhöhe durch die Gleichung

$$W_{n1n2} = \frac{r_1 r_2}{N_1 N_2} \int_{-v_M}^{v_M} \int_{-u_M}^{u_M} |H_{n1n2}(vr_1, ur_2)|^2 W(u,v)\, du\, dv$$

ausdrückt, wobei $r_1$ und $r_2$ die geometrischen Dimensionen eines Blocks sind und $H_{n1n2}$ die diskrete Fourier-Transformation der Basisfunktion der Ordnung $(n_1 n_2)$ der Einheitstransformation bezeichnet.

## Claims

1. A method of coding video signals for the transmission or digital storage of data relative to a still or moving image, in which the data relative to the image are read by successive blocks, then subjected to orthogonal transformation, the coefficients of the transform obtained being quantized, scanned according to a certain order and applied in the form of binary signals to a redundancy reducing coder, characterized in that the signals representing the coefficients of the transform (T) are stored in a memory (M3) organized in a plurality of blocks (B1, B2, ... B90) and in that the scanning of the content of said memory (M3) is performed in such a way that the signals applied to the redundancy reducing coder (CLV) comprise sets of signals of coefficients taken from a group of blocks, the signals of each coefficient in each set being taken from a separate block belonging to said group of blocks.

2. The method according to claim 1, characterized in that the orthogonal transformation (T), called perceptive, is such that each one of the transformed coefficients $(Y_{n_1 n_2})$ of the transform is obtained by multiplying the transformed coefficients $(X_{n_1 n_2})$ of a unitary transform known of itself by factors $(\sqrt{W_{n_1 n_2}})$ such that the quantization noise power weighted by the sensitivity of the eye as a function of spatial frequencies is minimal, this weighting being carried out independently of the statistical properties of the images.

3. The method according to claims 1 and 2, characterized in that said scanning by groups of blocks of coefficients of said perceptive transformation is carried out in such a manner as to obtain a progressively increasing quality of the coded image.

4. The method according to claim 1, 2 or 3, characterized in that said orthogonal transformation is applied to blocks of image elements taken in the same frame or in different frames.

5. The method according to claim 1, 2 or 3, characterized in that said orthogonal transformation and said scanning are applied to the predictive error determined in a known manner in a hybrid coder.

6. The method according to either one of the preceding claims, characterized in that said scanning is applied to groups of blocks comprising both image element blocks and predictive error blocks.

7. The method according to either one of the preceding claims, characterized in that said scanning presents to the redundancy reducing code sets of bits, each bit in a set belonging to a coefficient taken in a separate block of a group of blocks.

8. The method according to one of claims 2 to 7, characterized in that the perceptive transform is calculated by means of a matrix multiplier.

9. The method according to either one of claims 1 to 8, in which the noise weighting coefficient $W_{n_1 n_2}$ are used to define a weighted quantization noise power given by the formula

$$P_{N,p} = \sum_{n_1=0}^{N_1-1} \sum_{n_2=0}^{N_2-1} W_{n1n2} \, \sigma_{\epsilon x,n1n2}^2$$

where $\sigma_{\epsilon x,n1n2}$ is the variance of the quantization error affecting the transformed coefficient $X_{n_1 n_2}$ of the unitary transformation, characterized in that the weighting coefficients are related to a function $W(u,v)$, expressing the sensitivity of the eye as a function of spatial frequencies u and v in cycles per height of image, by the relation

$$W_{n1n2} = \frac{r_1 r_2}{N_1 N_2} \int_{-v_M}^{v_M} \int_{-u_M}^{u_M} |H_{n1n2}(vr_1, ur_2)|^2 W(u,v) \, du \, dv$$

where $r_1$ and $r_2$ are the geometric dimensions of a block and $H_{n_1 n_2}$ is the discrete Fourier transform of the basic order function $(n_1 n_2)$ of the unitary transformation.

FIG.1

FIG.2

FIG.3

FIG.4

FIG.5

FIG.6

B1  B2  B3  . . . . . . . . . . . . B90

1
2
3
.
.
.
.
.
.
.
63
64

# FIG. 7